# EUROPEAN PATENT SPECIFICATION

(11) **EP 1 650 459 B1**
(45) Date of publication and mention of the grant of the patent: **20.06.2007**
(21) Application number: 05256383.0
(22) Date of filing: 13.10.2005
(51) Int. Cl.: F16D 65/097, F16D 55/226

(54) **Device for retaining the friction linings of a brake disc**
Vorrichtung zur Halterung der Bremsbeläge einer Scheibenbremse
Dispositif de maintien des garnitures de friction d'un frein à disque

(30) Priority: 22.10.2004 GB 0423602
(43) Date of publication of application: 26.04.2006
(73) Proprietor: Freeman Automotive (UK) Ltd., Spencer Bridge Northampton NN5 7EA (GB)
(72) Inventor: Goosey, Vince, Wellingborough, Northants NN8 3JX (GB)
(74) Representative: Hedges, Martin Nicholas

(56) References cited:
- EP-A- 0 665 386
- WO-A-20/04065813
- DE-A1- 10 252 301
- US-A- 5 538 105

## Description

This invention relates to a vehicle brake, and more particularly to a disc brake assembly and to a pad pressure spring for use in a disc brake assembly. The preferred embodiment of the present invention relates to a disc brake assembly particularly suited to heavy commercial vehicles, but the scope of the present invention is not limited to such applications.

A vehicle disc brake typically comprises a disc fixed to the hub of a vehicle wheel and a calliper assembly secured to the vehicle chassis. The calliper assembly comprises a calliper in which a pair of brake pads are mounted. A suitable actuating mechanism is provided for forcing the brake pads towards each other in a direction parallel to the axis of rotation of the associated wheel.

The position of the brake pads in the radial direction of the wheel is often controlled by means of one or more springs which apply a radially inward bias to the brake pads thereby tending to hold the brake pads against appropriate shoulders provided on the brake calliper. In the case of commercial vehicle brakes the brake pads are relatively massive, typically weighing up to 2800 grams each. Accordingly, when the calliper is subject to significant accelerations tending to unseat the brake pads from their associated shoulders, a spring of substantial strength is required to prevent such movement. In a typical commercial vehicle brake such a spring is provided to act between the upper edge of the brake pad backing plates and a locking bar which is itself secured to the brake calliper. A prior art arrangement of this type is shown in EP-A-0534987. This patent application provides a solution to the problems associated with instantaneous release of the energy contained in a stressed spring when that spring is released as part of a brake service operation. The solution provided by EP-A-0534987 is to provide projections on the brake pad which engage in corresponding apertures in the brake spring so that the brake spring remains coupled to the brake pad when the pad locking bar is removed. The present invention provides an alternative solution to this problem.

In accordance with a first aspect of the present invention there is provided a disc brake assembly comprising a calliper, a pair of brake pads mounted in the calliper for engaging a brake disc, a locking bar secured to the calliper for locking the brake pads in their use position and a spring acting between the locking bar and the brake pads to bias the brake pads away from the locking bar said locking bar being formed separately from the spring and having a first end and a second end which engage with the calliper in order to secure the locking bar thereto, characterised in that the first end of the locking bar being releasable from the calliper to relieve the stress in the spring before the second end of the locking bar is disengaged from the calliper, the spring including an extension which is trapped between the second end of the locking bar and the calliper until after the first end of the locking bar has been released to relieve the stress in the spring.

An arrangement in accordance with the present invention enables the stress in the spring to be released before the spring is free to move away from the calliper. In a typical embodiment of the present invention the other end of the locking bar is received in a pocket provided in the calliper and the spring extension is trapped in the pocket by the locking bar until the locking bar is first removed form the pocket. The spring extension may, for example, include a projection which prevents the extension from being moved from the pocket until the locking bar has been removed.

In the present invention the spring preferably includes first and second leaf spring portions which act respectively on the two brake pads, the leaf spring portions being connected by a bridge portion to prevent relative movement between the leaf spring portions. Preferably, means are provided on the spring to limit or prevent circumferential movement (relative to the axis of rotation to the brake disc) of the spring relative to the locking bar. Such means may, for example, comprise upturned portions of the spring which can engage the lateral edges of the locking bar.

In a particularly preferred embodiment of the invention the spring is a single integral structure. Preferably, the spring includes a shield portion which overlies the portion of the locking bar located radially outwardly of the faces of the brake disc. Such a shield will have the effect of protecting the locking bar from debris thrown radially outwardly during braking operations. This debris can be extremely hot and have a deleterious effect on the locking bar. By providing a shield on the springs the locking bar is protected from such debris and will have an extended life expectancy.

Preferably, when the locking bar has been secured to the calliper the position of the spring relative to the calliper is fixed. It follows from this that as the friction surfaces of the brake pads wear the position of at least one of the brake pads relative to the spring will change. This is accommodated by sliding movement between the relevant brake pad and the spring. This contrasts with arrangements of the prior art as, for example, shown in EP-A-0534987 in which movement of the brake pads relative to the calliper as a result of brake pad wear is accommodated by sliding movement between the spring and the locking bar. The arrangement of the preferred embodiment of the present invention in which the spring is fixed relative to the calliper and the brake pad slides relative to the spring provides a highly stable mechanism in which any risk of twisting of the brake pad as a result of reluctance of the spring to slide relative to the locking bar is eliminated.

The invention will be better understood from the following description of a preferred embodiment thereof, given by way of example only, reference being had to the accompanying drawing wherein:
Figure 1 is a plan view of a spring for use in a preferred embodiment to the present invention;
Figure 2 is a side view of the spring of Figure 1;
Figure 3 is an end view of the spring of Figure 1;
Figure 4 is a perspective view of a spring according to a second embodiment of the invention; and
Figures 5 to 7 are various views showing the spring according to Figure 4 fitted onto a brake calliper.

Referring to the drawings, the spring 1 is an integral structure stamped and bent from suitable material, for example spring steel. The spring comprises two leaf spring portions 2, 3. Each leaf spring portion in the preferred embodiment is formed with the same transverse profile and includes two arms 4, 5 in the case of the leaf spring 2 and 6, 7 in the case of the leaf spring 3. The arms 4-7 arch downwardly from a longitudinally extending central backbone 8 and terminate in rounded ends 9 for engaging the respective back plates of associated brake pads. The spring illustrated in the drawings is intended for a sliding calliper design on which actuators are provided on one side only of the calliper. With such designs one brake pad (typically the outboard brake pad) remains in a substantially constant position relative to the calliper throughout its life. Accordingly, only the relatively narrow leaf spring 2 is required to apply the necessary radial inward force to this brake pad. The other brake pad moves relative to the calliper as friction material of the brake pads wears and accordingly the relatively wide leaf spring 3 is provided to ensure that the necessary force is applied to the brake pad regardless of its position relative to the calliper.

The backbone 8 is provided at one end thereof with an extension 10. The extension 10 has an upturned end 11. In use, the extension 10 and the upturned end 11 I are received within a pocket provided in the calliper for receiving one end of a locking bar. Because of the upturned end 11 the spring cannot be removed from the calliper until the locking bar has first been released from the calliper at the outboard end thereof and the inboard end has been removed from the pocket. Accordingly, the spring remains trapped relative to the calliper until the outboard end of the locking bar has been completely released. The effect of releasing the outboard end of the locking bar is to relieve all the stress applied to the spring. Accordingly, the possibility of the spring flying from the calliper as a result of sudden release of the stress applied to it is eliminated.

At the end of the spring remote from the extension 10 a locating device 12 is provided. The locating device is in the form of a pair of arms 13, 14, each having an upturned end 15. In use, the locking bar is received between the upturned ends 15 and accordingly the locating device 12 laterally locates the spring relative to the locking bar at the outboard end thereof.

In the region of the spring located between the leaf springs 2 and 3 a widened region 16 of the backbone 8 is provided to act as a shield. It will be appreciated by those skilled in the art that the widened regions 16 corresponds to the position of the disc and accordingly corresponds to the portion of the locking member which, in the absence of the shield, would be subject to debris thrown radially outwardly from the disc during braking. Such debris can be very hot and can have a deleterious effect on the material of the locking member. The shield 16 protects the locking member from such debris. The relatively narrow portion of the backbone located between the shield 16 and the leaf springs 2, 3 protects the leaf spring from any deleterious effects as a result of heating of the shield 16 in use.

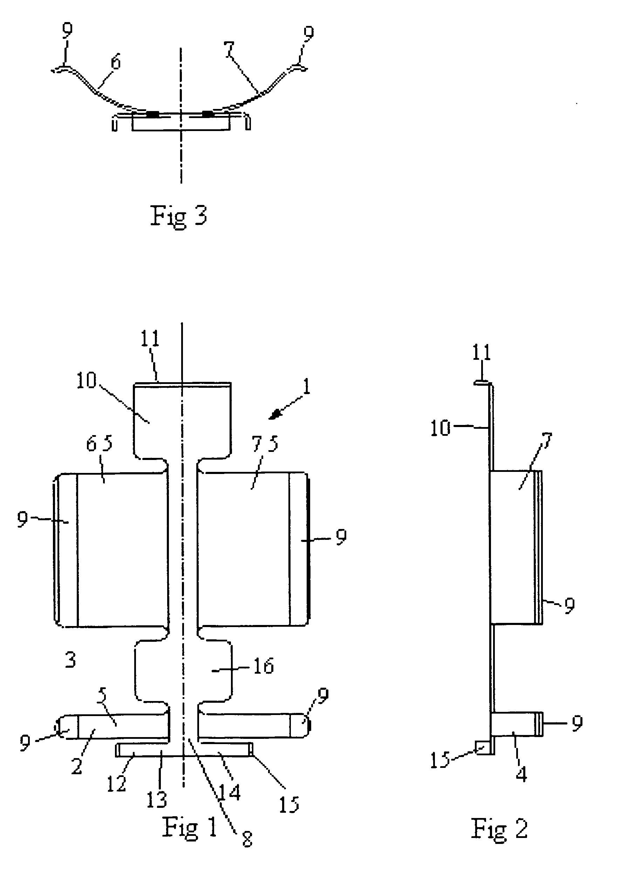

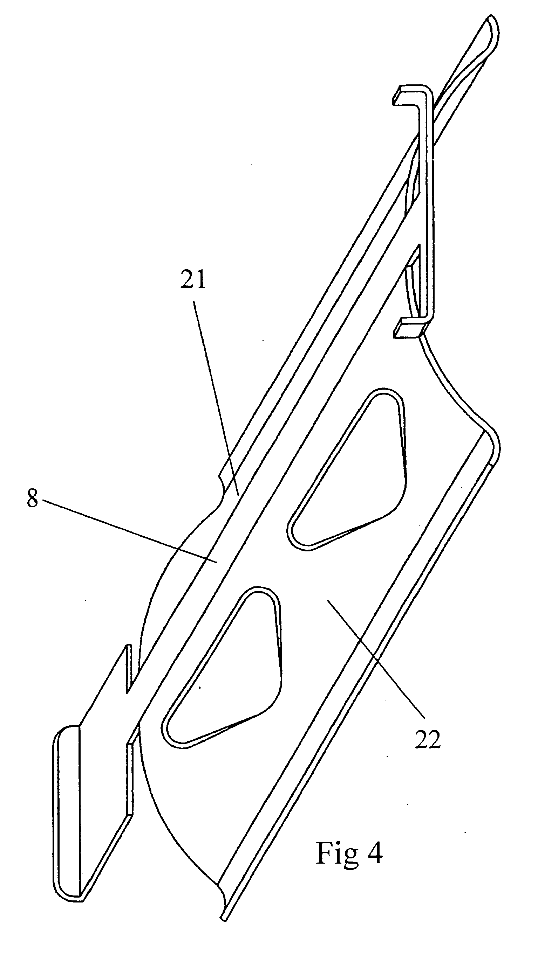

In a second embodiment of the invention illustrated in Figure 4, the pair of arms 4, 5; 6, 7, forming the two leaf springs 2, 3 are replaced by a single arm 21, 22 on each side of the backbone 8, each of which extend substantially along the length of the spring 1 so as to engage and retain both brake pads. The unitary arm structure avoids the need for a separate shield to protect the locking bar from debris emitted by the brake disc - the arms 21, 22 performing this function, and hence improves the strength of the spring due to the elimination of the points of weakness which exist at the transition from the backbone to the shield 16 in the spring of Figures 1 to 3. In all other respects, the spring of Figure 4 is identical with that of Figures 1 to 3.

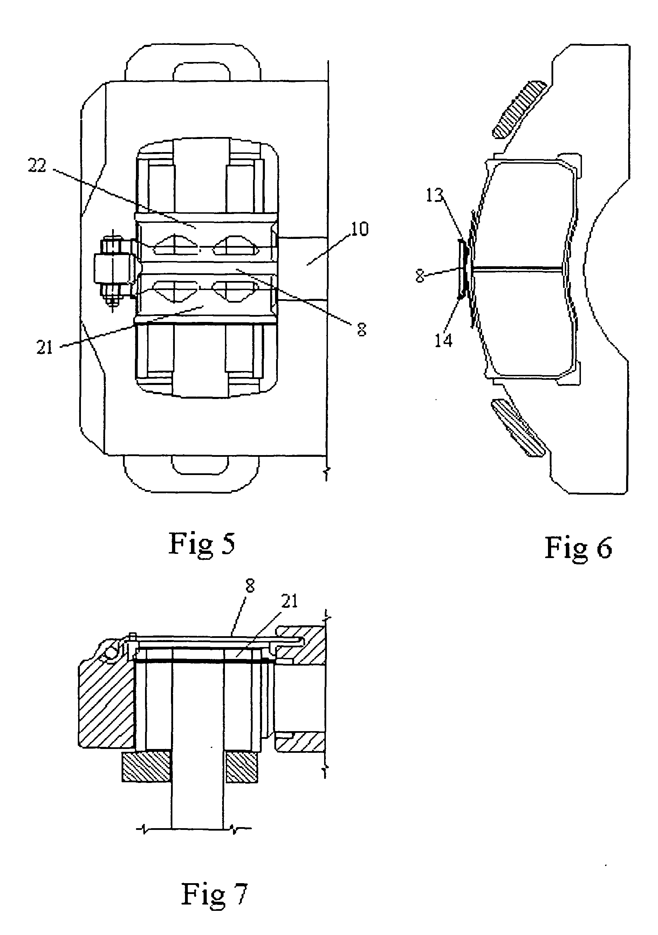

Referring next to Figures 5 to 7, the spring according to Figure 4 is shown fitted to a brake calliper. In order to utilise the spring illustrated in the drawings, a set of new brake pads will be inserted into a calliper and the extension 10 of a spring will be inserted into the pocket provided in the calliper for the inboard end of the locking bar. The locking bar will then be inserted into the pocket until it engages the upturned end 11 of the extension 10. The outboard end of the locking bar will then be forced radially inwardly relative to the axis of rotation of the disc to pre-stress the leaf springs 2, 3 against the back plates of the brake pads. The outboard end of the locking bar will be secured in position, by conventional means, for example a pin or screw. Once the locking bar has been secured in position the position of the spring is completely fixed relative to the calliper and all sliding movement as a result of brake pad use and wear will be between the back plate of the inboard brake pad and the spring 3. Because, as the brake pads wear, the backing plate will engage a fresh region of the spring 3 the spring is well able to withstand the wear associated with frictional movement between the backing plate and the spring. Also, because the position of the spring is rigidly fixed relative to the calliper it acts in a particularly stable manner in applying a constant force to the pad backing plates. There is no possibility of the spring twisting because it is unable to slide relative to the locking bar.

## Claims

1. A disc brake assembly comprising a calliper, a pair of brake pads mounted in the calliper for engaging a brake disc, a locking bar secured to the calliper for locking the brake pads in their use position and a spring (1) acting between the locking bar and the brake pads to bias the brake pads away from the locking bar,
said locking bar being formed separately from the spring (1) and having a first end and a second end which engage with the calliper in order to secure the locking bar thereto, **characterised in that** the first end of the locking bar being releasable from the calliper to relieve the stress in the spring (1) before the second end of the locking bar is disengaged from the calliper, the spring (1) including an extension (10) which is trapped between the second end of the locking bar and the calliper until after the first end of the locking bar has been released to relieve the stress in the spring (1).

2. A disc brake according to claim 1, wherein the calliper includes a pocket in which the second end of the locking bar engages, the spring extension (10) being trapped in the pocket by the locking bar when said other end is engaged therein.

3. A disc brake according to claim 2, wherein the spring extension (10) includes an projection (11) which hooks into the pocket in the calliper, the presence of the second end of the bar in the pocket preventing unhooking of the spring extension (10) from the pocket and thereby preventing removal of the spring (1).

4. A disc brake according to any of the preceding claims, wherein the spring (1) include guide means (15) for locating the locking bar in order to limit circumferential movement of the locking bar relative to the axis of rotation of the brake disc when the locking bar is secured to the calliper.

5. A disc brake according to claim 4, wherein said guide means include projections (15) on the spring (1) which extend away from the axis of rotation of the brake disc so as to form a channel between the projections (15) in which the locking bar engages.

6. A disc brake according to claim 5, wherein the spring (1) includes two projections (15), one being provided on a free end of each of a pair of guide arms (13, 14) provided on the end of the spring (1) remote from the spring extension (10).

7. A disc brake according to any of the preceding claims, wherein the spring (1) is a single, integral structure.

8. A disc brake according to claim 9, wherein the spring (1) includes a central spine (8) along which the locking bar extends.

9. A disc brake according to any of the preceding claims, wherein the spring (1) includes spring arms (4, 5, 6, 7) which extend transversely to the locking bar on both sides thereof along an arcuate path, said spring arms (4, 5, 6, 7) being pressed against the brake pads by the locking bar.

10. A disc brake according to claim 9, wherein said brake pads engage with a facing surface of said spring arms (4, 5, 6, 7), at least one of said brake pads being slidably movable along said surface relative to the spring (1) in a direction parallel to said locking bar.

11. A disc brake according to claim 10, wherein the spring (1) includes a shield portion (16) which is located between the outer circumference of the friction faces of the brake disc and the locking bar, and which protects the locking bar from debris thrown radially outwardly from the brake disc during braking operations.

12. A disc brake according to claim 9 or claim 10, wherein said spring (1) includes two spring arms which extend from opposite sides of the locking bar, each said spring arm extending along a substantial length of the spring (1) so as to engage both brake pads.

13. A disc brake according to any of the preceding claims, further including a retaining pin which engageable in the calliper in order to secure said first end of the locking bar to the calliper.

## Patentansprüche

1. Scheibenbremsenanordnung, umfassend einen Bremssattel, ein Paar Bremsbeläge, die in dem Bremssattel zum Eingreifen mit einer Bremsscheibe angebracht sind, einen an dem Bremssattel gesicherten Riegel zum Arretieren der Bremsbeläge in ihrer Verwendungsposition und eine Feder (1), die zwischen dem Riegel und den Bremsbelägen wirkt, um die Bremsbeläge von dem Riegel weg vorzuspannen,
wobei der Riegel separat von der Feder (1) ausgebildet ist und ein erstes und ein zweites Ende aufweist, die in den Bremssattel eingreifen, um den Riegel daran zu sichern,
**dadurch gekennzeichnet, dass** das erste Ende des Riegels von dem Bremssattel lösbar ist, um die Spannung in der Feder (1) abzubauen, bevor das zweite Ende des Riegels mit dem Bremssattel außer Eingriff gebracht wird, und die Feder (1) eine Verlängerung (10) enthält, die zwischen dem zweiten Ende des Riegels und dem Bremssattel so lange festsitzt, bis das erste Ende des Riegels gelöst worden ist, um die Spannung in der Feder (1) abzubauen.

2. Scheibenbremse nach Anspruch 1, wobei der Bremssattel eine Aufnahme enthält, in die das zweite Ende des Riegels eingreift, und die Federverlängerung (10) durch den Riegel in der Aufnahme festsitzt, während das andere Ende darin eingreift.

3. Scheibenbremse nach Anspruch 2, wobei die Federverlängerung (10) einen vorstehenden Teil (11) enthält, der sich in die Aufnahme in dem Bremssattel hakt, und das Vorhandensein des zweiten Endes des Riegels in der Aufnahme das Aushaken der Federverlängerung (10) aus der Aufnahme verhindert und dadurch das Ablösen der Feder (1) verhindert.

4. Scheibenbremse nach einem der vorhergehenden Ansprüche, wobei die Feder (1) Führungseinrichtungen (15) zum Positionieren des Riegels enthält, um Umfangsbewegung des Riegels relativ zu der Rotationsachse der Scheibenbremse zu verhindern, während der Riegel an dem Bremssattel gesichert ist.

5. Scheibenbremse nach Anspruch 4, wobei die Führungseinrichtungen vorstehende Teile (15) auf der Feder (1) enthalten, die sich von der Rotationsachse der Scheibenbremse weg erstrecken, um so einen Kanal zwischen den vorstehenden Teilen (15) zu bilden, in den der Riegel eingreift.

6. Scheibenbremse nach Anspruch 5, wobei die Feder (1) zwei vorstehende Teile (15) enthält, einer auf einem freien Ende von jedem Paar von Führungsarmen (13, 14) bereitgestellt, mit dem das Ende der Feder (1), das von der Federverlängerung (10) entfernt liegt, versehen ist.

7. Scheibenbremse nach einem der vorhergehenden Ansprüche, wobei die Feder eine einzelne integrale Konstruktion ist.

8. Scheibenbremse nach Anspruch 7, wobei die Feder (1) ein zentrales Rückgrat (8) enthält, entlang dem sich der Riegel erstreckt.

9. Scheibenbremse nach einem der vorhergehenden Ansprüche, wobei die Feder Federarme (4, 5, 6, 7) enthält, die sich quer zu dem Riegel auf beiden Seiten davon entlang einer Bogenbahn erstrecken, und wobei die Federarme (4, 5, 6, 7) durch den Riegel gegen die Bremsbeläge gepresst werden.

10. Scheibenbremse nach Anspruch 9, wobei die Bremsbeläge mit einer zugewandten Fläche mit den Federarmen (4, 5, 6, 7) in Eingriff kommen und wenigstens einer der Bremsbeläge, gleitend entlang der Fläche relativ zu der Feder (1), in einer Richtung parallel zu dem Riegel, bewegbar ist.

11. Scheibenbremse nach Anspruch 10, wobei die Feder (1) einen Schildteil (16) enthält, der zwischen dem Außenumfang der Reibeflächen der Bremsscheibe und dem Riegel angeordnet ist und der den Riegel vor Fremdkörpern schützt, die während der Bremsvorgänge radial von der Bremsscheibe nach außen geschleudert werden.

12. Scheibenbremse nach Anspruch 9 oder 10, wobei die Feder (1) zwei Federarme enthält, die sich von gegenüberliegenden Seiten des Riegels erstrecken, und wobei sich jeder Federarm entlang einer wesentlichen Länge der Feder (1) erstreckt, so dass er mit beiden Bremsbelägen in Eingriff kommt.

13. Scheibenbremse nach einem der vorhergehenden Ansprüche, die des Weiteren einen Haltebolzen umfasst, der mit dem Bremssattel in Eingriff gebracht werden kann, um das erste Ende des Riegels an dem Bremssattel zu sichern.

## Revendications

1. Ensemble de frein à disque comprenant un étrier, une paire de plaquettes de frein montée dans l'écrier pour la prise avec un disque de frein, une tige de blocage fixée à l'étrier pour verrouiller les plaquettes de frein dans leur position d'utilisation et un ressort (1) agissant entre la tige de blocage et les plaquettes de frein pour pousser les plaquettes de frein à distance de la tige de blocage, ladite tige de blocage étant formée séparément: du ressort (1) et ayant une première extrémité et une deuxième extrémité qui viennent en prise avec l'étrier afin de fixer la tige de blocage à celui-ci, **caractérisé en ce que** la première extrémité de la tige de blocage est apte à être libérée de l'étrier pour dégager la contrainte dans le ressort (1) avant que la deuxième extrémité de la tige de blocage soit dégagée de l'étrier, le ressort (1) comprenant un prolongement (10) qui est emprisonné entre la deuxième extrémité de la tige de blocage et l'étrier jusqu'à ce que la première extrémité de la tige de blocage ait été dégagée pour libérer la contrainte dans le ressort (1).

2. Frein à disque selon la revendication 1, dans lequel l'étrier comprend un logement dans laquelle la deuxième extrémité de la tige de blocage vient en prise, le prolongement (10) du ressort étant emprisonné dans le logement par la tige de blocage quand ladite autre extrémité est en prise dans celle-ci.

3. Frein à disque selon la revendication 2, dans lequel le prolongement (10) du ressort comprend une saillie (11) qui s'accroche dans le logement de l'étrier, la présence de la deuxième extrémité de la tige dans le logement empêchant, que le prolongement (10) du ressort se décroche du logement et empêchant ainsi que le ressort: s'en aille (1).

4. Frein à disque selon l'une quelconque des revendications précédentes, dans lequel le ressort (1) comprend des moyens de guidage (15) pour disposer la tige de blocage afin de limiter le mouvement circonférentiel de la tige de blocage par rapport à l'axe de rotation du disque de frein quand la tige de blocage est fixée à l'étrier.

5. Frein à disque selon la revendication 4, dans lequel lesdits moyens de guidage comportent des saillies (15) sur le ressort (1) qui s'étendent à distance de l'axe de rotation du disque de frein afin de former un canal entre les saillies (15) dans lequel la tige de blocage vient en prise.

6. Frein à disque selon la revendication 5, dans lequel le ressort (1) comprend deux saillies (15), l'une étant prévue sur une extrémité libre de chacune d'une paire de bras de guidage (13, 14) prévue sur l'extrémité du ressort (1) distante du prolongement (10) du ressort.

7. Frein à disque selon l'une quelconque des revendications précédentes, dans lequel le ressort (1) est une structure unique monobloc.

8. & Frein à disque selon la revendication 9, dans lequel le ressort (1) comprend une colonne centrale (8) le long de laquelle la tige de blocage se prolonge.

9. Frein à, disque selon l'une quelconque des revendications précédentes, dans lequel le ressort (1) comprend des bras élastiques (4, 5, 6, 7) qui s'étendent transversalement à la tige de blocage sur les deux côtes de celle-ci le long d'un trajet arqué, lesdits bras élastiques (4, 5, 6, 7) étant pressés contre les plaquettes de frein par la tige de blocage.

10. Frein à disque selon la revendication 9, dans lequel lesdites de frein viennent en prise avec une surface en desdits bras élastiques (4, 5, 6, 7), au moins une desdites plaquettes de frein étant mobile de façon coulissante le long de ladite surface par rapport au ressort (1) dans une direction parallèle à ladite tige de blocage.

11. Frein à disque selon la revendication 10, dans lequel le ressort (1) comprend une partie de protection (16) qui est située entre la circonférence extérieure des faces de friction du disque de frein et la tige de blocage et qui protège la tige de blocage des débris projetés radialement vers l'extérieur à partir du disque de frein pendant les opérations de freinage.

12. Frein à disque selon la revendication 9 ou la revendication 10, dans lequel ledit ressort (1) comprend deux bras élastiques qui s'étendent à partir des côtes opposes de la tige de blocage, chacun desdits bras élastiques s'étendant le long de l'essentiel de la longueur du ressort (1) afin de venir en prise avec les deux plaquettes de frein.

13. Frein à disque selon l'une quelconque des revendications précédentes, comprenant, en outre, une tige de retenue qui est apte à venir en prise dans l'étrier afin de fixer ladite première extrémité de la tige de blocage à l'étrier.
